(19) **Europäisches Patentamt / European Patent Office / Office européen des brevets**

(11) **EP 4 388 684 B1**

(12) **FASCICULE DE BREVET EUROPEEN**

(45) Date de publication et mention
de la délivrance du brevet:
**02.07.2025 Bulletin 2025/27**

(21) Numéro de dépôt: **22769766.1**

(22) Date de dépôt: **19.08.2022**

(51) Classification Internationale des Brevets (IPC):
*H04B 10/2507* (2013.01)  *H04B 10/2581* (2013.01)
*H04J 14/04* (2006.01)  *H04J 14/06* (2006.01)
*H04B 10/516* (2013.01)  *H04J 14/00* (2006.01)

(52) Classification Coopérative des Brevets (CPC):
**H04B 10/2572; H04B 10/2581; H04B 10/516;
H04J 14/04; H04J 14/052; H04J 14/06**

(86) Numéro de dépôt international:
**PCT/FR2022/051590**

(87) Numéro de publication internationale:
**WO 2023/021261 (23.02.2023 Gazette 2023/08)**

(54) **MÉTHODE DE CODAGE IQ POUR SYSTÈME DE COMMUNICATION SDM SUR FIBRE OPTIQUE**

IQ-CODIERUNGSVERFAHREN FÜR EIN SDM-KOMMUNIKATIONSSYSTEM AUF EINER
OPTISCHEN FASER

IQ ENCODING METHOD FOR FIBER OPTIC SDM COMMUNICATION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.08.2021 FR 2108805**

(43) Date de publication de la demande:
**26.06.2024 Bulletin 2024/26**

(73) Titulaire: **MIMOPT Technology
75014 Paris (FR)**

(72) Inventeurs:
• **REKAYA, Ghaya
92160 ANTONY (FR)**
• **ABOUSEIF, Akram
75013 PARIS (FR)**

(74) Mandataire: **Fidal Innovation
4-6 avenue d'Alsace
92400 Courbevoie (FR)**

(56) Documents cités:
• **ZHU CHEN ET AL: "Subband Pairwise Coding for
Robust Nyquist-WDM Superchannel
Transmission", JOURNAL OF LIGHTWAVE
TECHNOLOGY, IEEE, USA, vol. 34, no. 8, 15 April
2016 (2016-04-15), pages 1746 - 1753,
XP011601664, ISSN: 0733-8724, [retrieved on
20160303], DOI: 10.1109/JLT.2015.2510362**
• **C. ZHU ET AL.: "Improved polarization
dépendent loss tolerance for polarization
multiplexed coherent optical systems by
polarization pairwise coding", OPTICS
EXPRESS, vol. 23, no. 21, 19 October 2015
(2015-10-19), pages 27434 - 27447, XP055418755,
DOI: 10.1364/OE.23.027434**

**Description**

**DOMAINE TECHNIQUE**

La présente invention concerne le domaine des communications sur fibres optiques et plus particulièrement les communications à multiplexage spatial ou SDM *(Spatial Division Multiplexing)*.

**ÉTAT DE LA TECHNIQUE ANTÉRIEURE**

Les progrès réalisés ces dernières années en matière de réduction d'atténuation dans les fibres optiques monomodes ont permis à ces dernières d'atteindre quasiment leurs capacités de transmission théoriques. Les systèmes de communication optique à multiplexage spatial (SDM) basés sur des fibres optiques multimodes et/ou de type multicœur (voire des faisceaux de fibres monomodes à épaisseur de gain réduite assimilés dans la suite à des fibres optiques multicœur) permettent de dépasser cette limite en mettant à profit un mutliplexage spatial entre différents modes et/ou entre différents cœurs d'une fibre optique.

Le recours à des ordres de modulation élevés ainsi que le multiplexage sur polarisations orthogonales ont permis d'accroître encore davantage la capacité des systèmes de communication SDM mais ces progrès se heurtent désormais à différentes limitations.

Tout d'abord, l'accroissement du nombre de modes/ cœurs conduit à une augmentation du niveau d'interférence entre les canaux élémentaires associés aux différents modes/ coeurs.

Ensuite, différents phénomènes de dispersion tels que dispersion de mode ou MDL (*Mode Dispersion Loss*), la dispersion de cœur ou CDL (*Core Dispersion Loss*), la dispersion de polarisation ou PMD (*Polarization Mode Dispersion*) et l'atténuation dépendante de la polarisation ou PDL (*Polarization Dependent Loss*) augmentent le taux d'erreur (BER) dans les différents canaux. Or, si les effets dus à la MDL, CDL et PMD peuvent être compensés de manière numérique à la réception, ceux dus à la PDL ne peut l'être en raison de son caractère non-unitaire, ce qui dégrade les performances des systèmes de transmission SDM en termes de BER en fonction du débit, et donc de capacité de transmission.

Il a été proposé dans la thèse d'Akram Abouseif intitulée « Emerging DSP techniques for multi-core fiber transmission systems », publiée en 2015, de recourir à des techniques de codage spatio-temporel pour combattre la dégradation de la capacité de transmission due à la CDL. Toutefois ces techniques de codage complexifient l'émetteur et le récepteur puisque le bloc de symboles d'information à transmettre est codé sur plusieurs intervalles de transmission successifs ou TTIs (*Time Transmission Intervals*) et, de manière plus générale, sur plusieurs utilisations de canal ou CUs (*Channel Uses*).

De manière similaire, il a été proposé dans la thèse de El Mehdi Amhoud et al. intitulée « Techniques de codage pour le multiplexage spatial sur les systèmes fibres optiques», 2018, de recourir à des techniques de codage spatio-temporel pour combattre la dégradation de la capacité de transmission due à la MDL.

Une méthode de précodage sur polarisations orthogonales pour combattre la réduction de capacité en raison de la PDL a été décrite dans l'article de C. Zhu et al. intitulé « Improved polarization dependent loss tolerance for polarization multiplexed coherent optical systems by polarization pairwise coding » publié dans Optics Express, vol. 23, no. 21, october 19th, 2015, pp. 27434-27447.

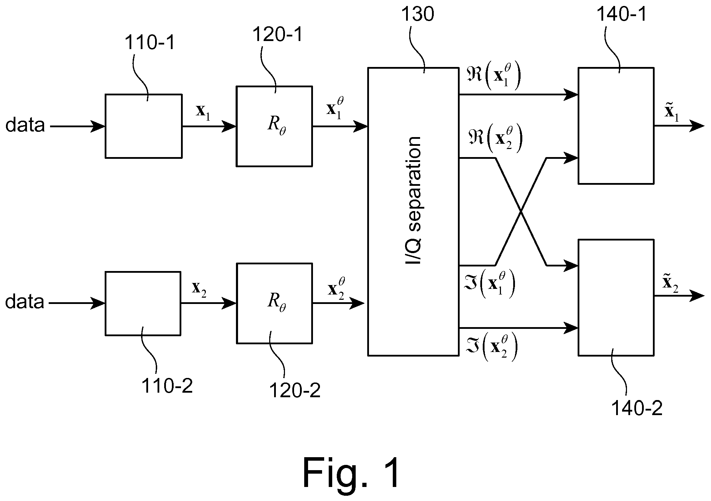

Cette méthode de précodage sur polarisations orthogonales a été illustrée schématiquement en Fig. 1.

Les symboles d'information (mots binaires) à transmettre sont convertis en symboles d'une constellation de modulation dans les modulateurs $q$ -aire à symbole 110-1 et 110-2. Les symboles de modulation obtenus, $\mathbf{x}_1$, $\mathbf{x}_2$ font ensuite l'objet d'une rotation d'angle $\theta$ dans le plan complexe au moyen des modules de rotation respectifs 120-1 et 120-2 pour obtenir des symboles tournés, $\mathbf{x}_1^\theta, \mathbf{x}_2^\theta$ . La partie réelle du premier symbole tourné et la partie réelle du second symbole tourné sont combinées en 130-1 pour fournir un premier symbole d'émission, $\tilde{\mathbf{x}}_1 = \Re\left(\mathbf{x}_1^\theta\right) + j\Re\left(\mathbf{x}_2^\theta\right)$ , porté par une première composante de polarisation (par exemple un état de polarisation horizontale). De manière similaire, la partie imaginaire du premier symbole tourné et la partie imaginaire du second symbole tourné sont combinées en 130-2 pour fournir un second symbole d'émission $\tilde{\mathbf{x}}_2 = \Im\left(\mathbf{x}_1^\theta\right) + j\Im\left(\mathbf{x}_2^\theta\right)$ , porté par une seconde composante de polarisation orthogonale à la première (par exemple un état de polarisation verticale).

Le signal lumineux dont les composantes de polarisation orthogonales ont été respectivement modulées par les symboles d'émission $\mathbf{X}_1$, $\mathbf{X}_2$ est ensuite transmis sur la fibre optique.

La méthode de précodage décrite dans cet article ne s'applique toutefois qu'à un système de transmission sur fibre optique monomode/ monocœur et non à un système de communication optique SDM.

Un objet de la présente invention est par conséquent de proposer une méthode de transmission SDM sur fibre optique (multimode et/ou multicœur) qui permette d'atteindre des capacités de transmission élevées en dépit de la PDL et de l'interférence entre canaux spatiaux élémentaires (interférence entre différents modes et/ou différents cœurs) tout en ne requérant qu'une seule utilisation de canal de transmission pour transmettre un bloc de symboles d'information.

## EXPOSÉ DE L'INVENTION

La présente invention est définie par une méthode de transmission SDM sur fibre optique à dualité de polarisation, destinée à transmettre, pendant une utilisation de canal, symboles appartenant à une constellation de modulation dans le plan complexe, étant le nombre de canaux spatiaux élémentaires utilisés pour la transmission, ladite méthode étant originale en ce que :

lesdits symboles subissent une séparation en partie réelle et partie imaginaire pour fournir un premier vecteur constitué des parties réelles de ces symboles et un second vecteur constitué des parties imaginaires de ces mêmes symboles ;
une première transformation linéaire orthogonale est appliquée au premier vecteur pour fournir un premier vecteur transformé ;
une seconde transformation linéaire orthogonale, distincte de la première, est appliquée au second vecteur pour fournir un second vecteur transformé ;
un scalaire complexe, solution d'un polynôme irréductible de $\mathbb{R}[X]$ dans $\square$ est multiplié au premier ou bien au second vecteur transformé, avant que les deux vecteurs transformés ne soient sommés pour fournir un vecteur constitué de symboles d'émission complexes, chaque symbole d'émission complexe modulant un premier état et un second état de polarisation d'un canal spatial élémentaire.

Selon un mode préférentiel de réalisation, la première transformation linéaire est la composition d'une première rotation avec une première permutation non triviale et/ou une première réflexion non triviale dans $\mathbb{R}^{2N}$ et que la seconde transformation linéaire est la composition d'une seconde rotation avec une seconde permutation non triviale et/ou une seconde réflexion non triviale dans $\mathbb{R}^{2N}$.

La première permutation peut être composée d'une pluralité paire de transpositions et la seconde permutation peut alors être composée d'une pluralité impaire de transpositions, ou réciproquement. Par exemple, la première rotation et la seconde rotation sont identiques.

Selon un exemple de réalisation, la première transformation linéaire orthogonale est l'identité.

Quel que soit le mode de réalisation le scalaire complexe, $\alpha$ tel que $\alpha^{2N}$ ne soit pas un réel positif.

Par exemple, le scalaire complexe est égal à $j$ avec $j^2 = -1$. Dans ce cas, le nombre $N$ est avantageusement choisi impair avec $N \geq 3$.

Les canaux spatiaux élémentaires peuvent être des modes de propagation dans la fibre optique.

Lorsque la fibre optique est de type multicœur, les canaux spatiaux élémentaires peuvent être constitués de différents cœurs de ladite fibre

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique un dispositif de transmission sur fibre optique utilisant une technique de pré-codage sur deux polarisations orthogonales ;
La Fig. 2 représente de manière schématique un dispositif de transmission SDM sur fibre optique à codage IQ selon un mode général de réalisation de l'invention ;
La Fig. 3 représente de manière schématique un dispositif de transmission SDM sur fibre optique à codage IQ selon un mode préférentiel de réalisation de l'invention ;
La Fig. 4 représente de manière schématique un dispositif de transmission SDM sur fibre optique à codage IQ selon un premier exemple de réalisation de l'invention ;
La Fig. 5 représente de manière schématique un dispositif de transmission SDM sur fibre optique à codage IQ selon un second exemple de réalisation de l'invention ;
La Fig. 6 montre sur un exemple le gain apporté par un dispositif de transmission SDM selon l'invention.

## EXPOSÉ DÉTAILLÉ DE MODES DE RÉALISATION PARTICULIERS

Nous considérerons dans la suite un système de transmission à diversité spatiale (SDM) sur fibre optique. La diversité spatiale peut être due à la pluralité de modes et/ou de cœurs dans la fibre. Dans le cas d'une fibre multimode classique, le diamètre du cœur est suffisamment grand pour permettre la propagation de plusieurs modes à la longueur d'onde considérée. Dans le cas d'une fibre de type multicœur, la propagation a lieu dans une pluralité de cœurs élémentaires de la fibre. Le cas d'un faisceau de fibres monomodes à épaisseur de gaine réduite est assimilé dans la suite à une fibre multicœur.

Les systèmes de transmission SDM envisagés dans la suite peuvent être de l'un et/ou de l'autre type, étant entendu que les canaux spatiaux élémentaires sont alors des modes de propagation et/ou des cœurs d'une fibre optique.

Nous supposerons en outre que la fibre optique est classiquement affectée par une atténuation PDL, autrement dit que les différents états de polarisation dans la fibre ne subissent pas la même atténuation. On rappelle que l'atténuation PDL est généralement introduite par des éléments optiques entre tronçons de fibre, notamment des amplificateurs optiques à fibre dopée (EDFA) qui créent des pertes d'énergie et des fluctuations de rapport de signal optique à bruit ou OSNR (Optical Signal to Noise Ratio). Abstraction sera faite en revanche de la dispersion de polarisation (PMD) dans la mesure où cet effet peut être corrigé efficacement par l'égalisation de canal dans le DSP du récepteur.

L'effet de l'atténuation PDL dans un canal spatial élémentaire peut s'exprimer par la matrice $\mathbf{H}_{PDL}$ s'appliquant aux deux états de polarisation :

$$\mathbf{H}_{PDL} = \mathbf{D}_{\gamma}\mathbf{R}_{\varphi}\mathbf{B}_{\beta}$$

où $\mathbf{D}_{\gamma} = \begin{pmatrix} \sqrt{1+\gamma} & 0 \\ 0 & \sqrt{1-\gamma} \end{pmatrix}$ est la matrice de gain, $\mathbf{R}_{\varphi} = \begin{pmatrix} \cos\varphi & -\sin\varphi \\ \sin\varphi & \cos\varphi \end{pmatrix}$ est la matrice de rotation de la

polarisation et $\mathbf{B}_{\beta} = \begin{pmatrix} \exp(i\beta) & 0 \\ 0 & \exp(i\beta) \end{pmatrix}$ est la matrice de biréfringence avec $\gamma \in [0,1]$ définissant la valeur de

PDL, $\Gamma_{dB} = \log_{10}(\Gamma)$, avec $\Gamma = \dfrac{1+\gamma}{1-\gamma}$ et $\varphi, \beta \in [-\pi, \pi]$.

Le système de transmission SDM utilise une pluralité $N$ de canaux spatiaux élémentaires, chaque canal spatial élémentaire étant associé à deux états de polarisation. Ainsi, à chaque instant de transmission, autrement dit à chaque usage du canal, le système de transmission peut transmettre $2N$ symboles de modulation, un symbole étant transmis par état de polarisation et par canal spatial élémentaire. Le nombre $N$ est choisi généralement élevé, de l'ordre de plusieurs dizaines voire plus. En tout état de cause $N > 1$ et, de préférence, $N > 2$.

L'idée à la base de la présente invention est de séparer les parties réelles et les parties imaginaires des différents symboles de modulation et de leur faire subir des transformations linéaires orthogonales distinctes avant de les recombiner dans le plan complexe pour moduler ensuite le signal lumineux avec les différents canaux spatiaux élémentaires/ polarisations On effectue ainsi un moyennage de l'atténuation PDL sur les différents états de polarisation et les différents canaux spatiaux élémentaires.

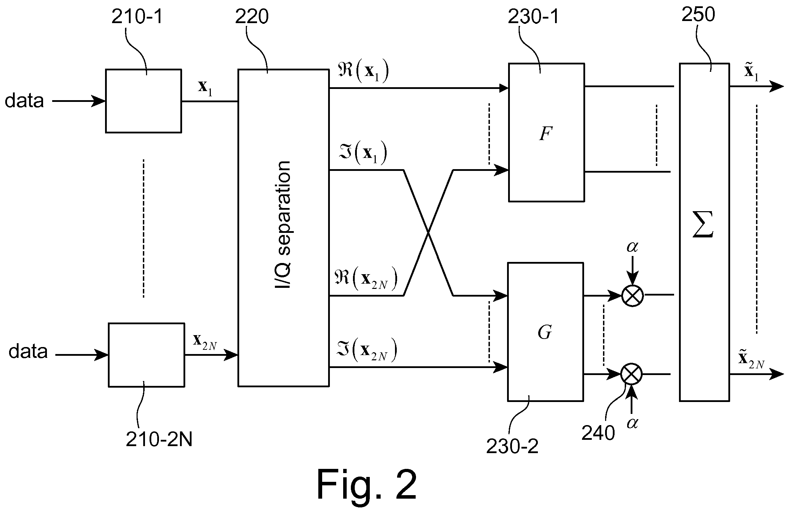

La Fig. 2 représente schématiquement un dispositif de transmission SDM sur fibre optique selon un mode général de réalisation de l'invention.

Les données à transmettre à chaque intervalle de transmission se présentent sous la forme de $2N$ symboles d'information, par exemple $2N$ mots $q$-aires avec $q \leq \log_2 Q$ où $Q$ est le cardinal de l'alphabet de modulation. L'alphabet de modulation peut notamment être un alphabet $Q$-QAM.

Les symboles d'information peuvent résulter eux-mêmes d'un codage source et/ou d'un codage canal, de manière connue en soi.

Dans tous les cas, les $2N$ symboles d'information sont respectivement convertis en $2N$ symboles de modulation dans les modulateurs $q$-aire à symbole 210-1,...,210-2N. Les indices impairs de ces symboles correspondent à un premier état de polarisation et les indices pairs à un second état de polarisation, orthogonal au premier. Chacun de ces symboles de modulation, notés dans la suite $\mathbf{x}_1,...,\mathbf{x}_{2N}$, est ensuite soumis à une décomposition en partie réelle et une partie imaginaire dans le module de séparation I/Q, 220.

Les parties réelles respectives de ces symboles de modulation $\Re(\mathbf{x}_1),..., \Re(\mathbf{x}_{2N})$ forment un vecteur $\mathbf{X}_R$ de $\mathbb{R}^{2N}$ qui est fourni à un premier module de combinaison linéaire 230-1. Ce premier module combine ces parties réelles au moyen d'une première transformation linéaire orthogonale, $F$, représentée par une matrice $F \in O(2N, \mathbb{R})$, pour fournir un premier vecteur transformé, $\tilde{\mathbf{X}}_R$, dans $\mathbb{R}^{2N}$.

De manière similaire, les parties imaginaires des symboles de modulation forment un vecteur $\mathbf{X}_I$ de $\mathbb{R}^{2N}$ qui est

fourni à un second module de combinaison linéaire, 230-2. Ce second module combine ces parties imaginaires au moyen d'une seconde transformation linéaire orthogonale, $G$, représentée par une matrice $\boldsymbol{G} \in O(2N, \mathbb{R})$, pour fournir un second vecteur transformé, $\tilde{\boldsymbol{X}}_I$, dans $\mathbb{R}^{2N}$.

Les transformations linéaires orthogonales $F$ et $G$ sont avantageusement choisies distinctes. Par exemple, l'une d'elles pourra être une transformation linéaire orthogonale directe, autrement dit la matrice correspondante sera un élément du groupe spécial orthogonal $SO(2N, \mathbb{R})$, et l'autre sera une transformation linéaire orthogonale indirecte.

Le second vecteur transformé est ensuite multiplié en 240 par une valeur scalaire complexe $\alpha$, solution d'un polynôme de $\mathbb{R}[X]$, irréductible dans $\mathbb{R}$. De préférence, $\alpha$ sera choisi pour ne pas être une norme d'un élément dans le plan complexe, autrement dit $\alpha^{2N}$ ne devra pas être un réel positif.

Le premier vecteur transformé et le second vecteur transformé ainsi multiplié sont enfin sommés dans le sommateur 250 pour fournir un vecteur de $\mathbb{C}^{2N}$, X dont les éléments complexes, $\tilde{\mathbf{x}}_1,...,\tilde{\mathbf{x}}_{2N}$, sont des symboles d'émission respectivement utilisés pour moduler les $2N$ états de polarisation des $N$ canaux spatiaux élémentaires. Plus précisément la composante d'un premier état de polarisation (par exemple une composante de polarisation horizontale) d'un canal spatial élémentaire d'indice n sera donnée par $\Re(\tilde{\mathbf{x}}_n)$ et celle d'un second état de polarisation (par exemple une composante de polarisation verticale) de ce canal spatial élémentaire sera donnée par $\Im(\tilde{\mathbf{x}}_n)$, ou vice-versa.

En définitive, le vecteur $\tilde{\mathbf{X}}$ peut s'exprimer, à un coefficient multiplicatif près, sous la forme :

$$\tilde{\mathbf{X}} = \mathbf{F}\mathbf{X}_R + \alpha\mathbf{G}\mathbf{X}_I \tag{1}$$

Selon une variante non représentée, le premier vecteur transformé est multiplié par la valeur scalaire complexe $\alpha$ en lieu et place du second vecteur transformé, le premier vecteur transformé ainsi multiplié étant ensuite sommé avec le second vecteur transformé pour fournir le vecteur $\tilde{\mathbf{X}}$.

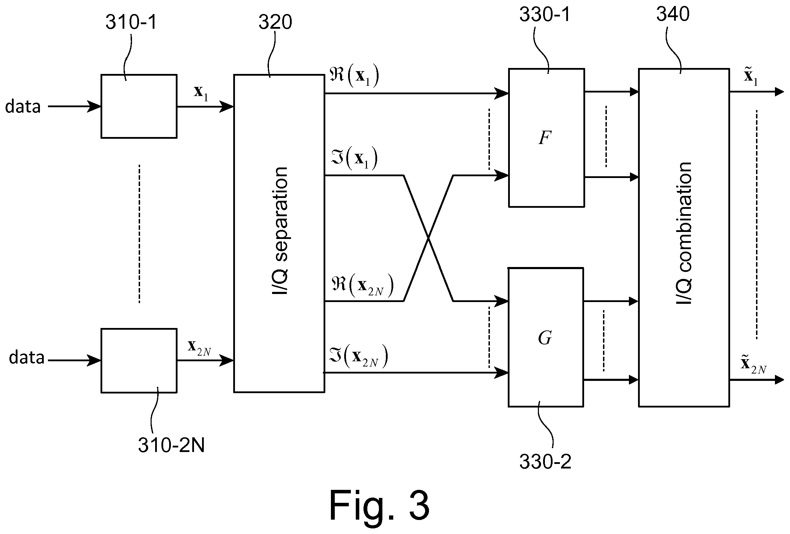

La Fig. 3 représente de manière schématique un dispositif de transmission SDM sur fibre optique selon un mode préférentiel de réalisation de l'invention.

Les modules 310-1,...,310-2N, 320, 330-1 et 330-2 remplissent ici respectivement les mêmes fonctions que les modules 210-1,...,210-2N, 220, 230-1 et 230-2 dans la Fig. 2.

A la différence du mode de réalisation illustré en Fig. 2, le premier vecteur transformé et le second vecteur transformé sont combinés par le module de combinaison I/Q, 340, pour former le vecteur complexe $\tilde{\mathbf{X}} = \tilde{\mathbf{X}}_R + j\tilde{\mathbf{X}}_I$ dans $\mathbb{C}^{2N}$. Autrement dit, ce mode de réalisation se déduit comme cas particulier du mode général de réalisation avec $\alpha = j$, le module de combinaison I/Q remplaçant ici le multiplieur 240 et le sommateur 250.

Avantageusement, le scalaire complexe $\alpha$ n'est pas une norme, autrement dit $N$ est choisi impair avec $N \geq 3$.

Les éléments complexes $\tilde{\mathbf{x}}_1,...,\tilde{\mathbf{x}}_{2N}$ du vecteur $\tilde{\mathbf{X}}$ sont respectivement utilisés pour moduler les $2N$ états de polarisation des $N$ canaux spatiaux élémentaires.

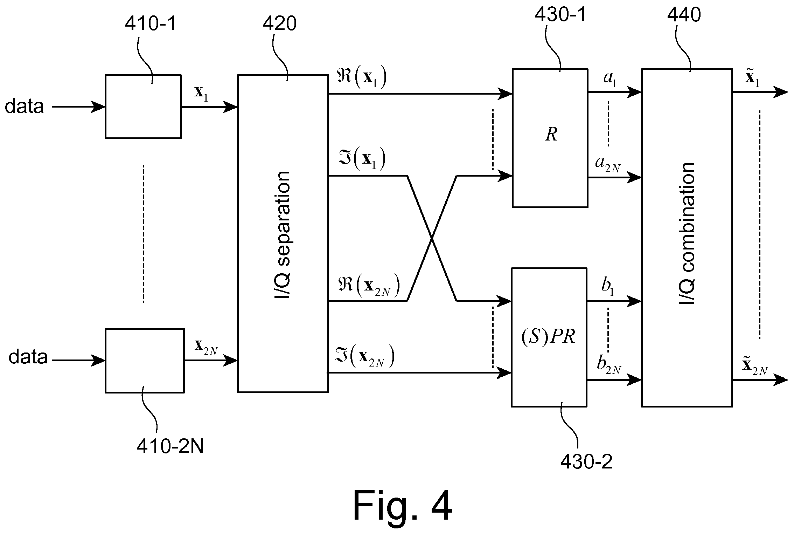

La Fig. 4 représente de manière schématique un dispositif de transmission SDM sur fibre optique à codage IQ selon un premier exemple de réalisation de l'invention.

Les modules 410-1,...,410-2N, 420, 430-1, 430-2, 440 remplissent respectivement les mêmes fonctions que les modules 310-1,...,310-2N, 320, 330-1, 330-2 et 340 de la Fig.3.

Cet exemple de réalisation est un cas particulier du mode de réalisation préférentiel de la Fig. 3 en ce que la première transformation linéaire est directe, c'est-à-dire une rotation $R$ dans l'espace dans $\mathbb{R}^{2N}$.

La seconde transformation linéaire résulte de la composition de cette rotation $R$ avec une permutation non triviale $P$ dans $\mathbb{R}^{2N}$ et/ou une réflexion non triviale $S$ dans $\mathbb{R}^{2N}$. Par permutation non triviale, on entend une permutation distincte de l'identité $Id_{\mathbb{R}^{2N}}$. Par réflexion non triviale, on entend une réflexion distincte de $-Id_{\mathbb{R}^{2N}}$.

La permutation peut être composée d'un nombre pair de transpositions auquel cas la seconde transformation linéaire est encore une rotation, ou bien être composée d'un nombre impair de telles transpositions.

La permutation peut être cyclique, la seconde transformation linéaire étant alors représentée par la matrice **PR** où $\mathbf{P} \in \{\Phi, \Phi^2,...,\Phi^{2N-1}\}$ ensemble des permutations possibles (hormis la permutation triviale) et où $\Phi$ est la matrice de permutation cyclique définie par :

$$\mathbf{\Phi} = \begin{pmatrix} 0 & 1 & 0 & \cdots & 0 \\ 0 & 0 & 1 & \cdots & 0 \\ \vdots & & \ddots & \ddots & \vdots \\ 0 & 0 & \cdots & 0 & 1 \\ 1 & 0 & \cdots & 0 & 0 \end{pmatrix}$$

Comme dans le cas général, les rôles des première et seconde transformations linéaires peuvent être interchangés. Autrement dit, la rotation $R$ peut être appliquée au vecteur des parties imaginaires $\mathbf{X}_I$ et la composée de la rotation et de la permutation et/ou la réflexion $(S)PR$ / $S(P)R$ peut être appliquée au vecteur des parties réelles $\mathbf{X}_R$.

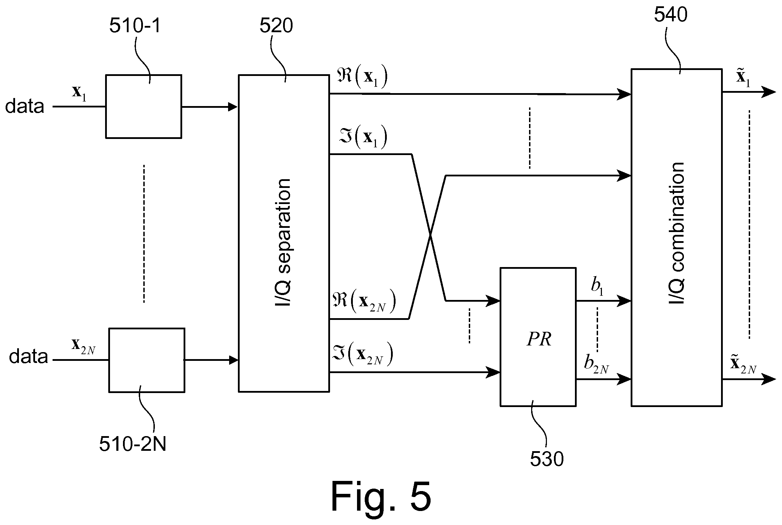

La Fig. 5 représente de manière schématique un dispositif de transmission SDM sur fibre optique à codage IQ selon un second exemple de réalisation de l'invention.

Les modules 510-1,...,510-2N, 520, 530, 540 remplissent respectivement les mêmes fonctions que les modules 310-1,...,310-2N, 320, 530-2 et 540 de la Fig.3.

Cet exemple de réalisation est un cas particulier du mode de réalisation préférentiel de la Fig. 3 en ce que la première transformation linéaire est triviale et égale à l'identité $Id_{\mathbb{R}^{2N}}$, et que la seconde transformation linéaire résulte de la composition de cette rotation R avec une permutation P triviale ou non dans $\mathbb{R}^{2N}$.

Le premier vecteur et le second vecteur transformé sont ici combinés pour former le vecteur complexe $\tilde{\mathbf{X}}$ des symboles destinés à moduler les 2N états de polarisation comme précédemment.

Dans tous les cas, le signal optique reçu est démultiplexé spatialement (par mode de propagation et/ou par cœur) et par polarisation. Le canal MIMO $2N \times 2N$ peut être estimé, par exemple à l'aide d'un algorithme LS (*Least Squares*) à partir de symboles pilotes. Les symboles émis par le dispositif de transmission peuvent être ensuite estimés à l'aide d'un décodeur MIMO utilisant une estimation ML (*Maximum* Likelihood) voire, plus simplement, une estimation ZF *(Zero Forcing)* visant à multiplier le signal reçu par le pseudo-inverse de la matrice du canal, à savoir $\widehat{\widetilde{X}} = (H^H H)^{-1} H^H Y$ où **Ĥ** de taille $2N \times 2N$ est l'estimée du canal MIMO.

Après séparation des parties réelles et imaginaires de chacune des composantes de $\widehat{\widetilde{X}}$ et formation d'un premier vecteur $\overline{\mathbf{X}}_R$ constitué des 2N parties réelles et d'un second vecteur $\overline{\mathbf{X}}_I$ constitué des 2N parties imaginaires, on applique une première transformation orthogonale inverse $\mathbf{F}^{-1}$ au premier vecteur $\overline{\mathbf{X}}_R$ et une seconde transformation orthogonale inverse $\mathbf{G}^{-1}$ au second vecteur, multiplié par $\alpha^{-1}$, $\alpha^{-1}\overline{X}_I$. On peut ensuite estimer les parties réelles et imaginaires des symboles de modulation à partir des composantes de même rang des vecteurs ainsi obtenus.

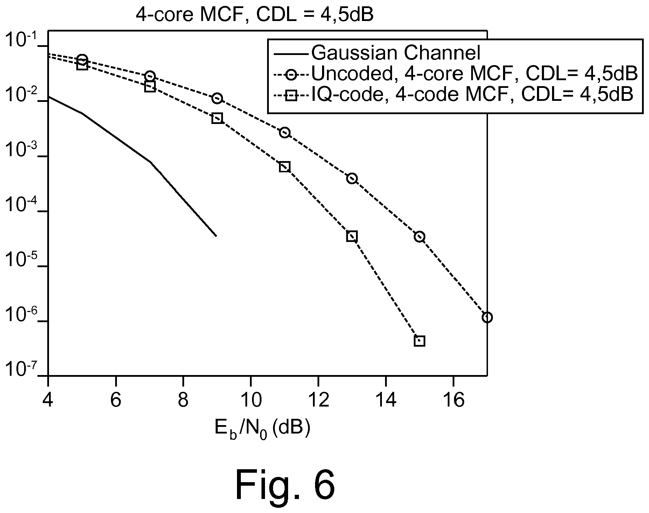

La Fig. 6 montre sur un exemple le gain apporté par un dispositif de transmission SDM selon l'invention pour $N = 4$ canaux spatiaux élémentaires, ici des cœurs élémentaires d'une fibre multicœur (MCF).

On a supposé que la valeur de PDL, $\Gamma_{dB}$ était identique pour tous les canaux spatiaux élémentaires et égal à 4.5 dB, la rotation de polarisation, $\varphi$ était égale à $\pi/2$.

La fibre optique était constituée de 10 tronçons de 100 kms chacun, un amplificateur optique à gain constant sur les différents modes étant prévu entre tronçons consécutifs. Le débit symbole était de 12 Gbauds et la constellation de modulation était une 16-QAM.

Le mode de réalisation choisi était celui de la Fig. 5 avec $P = Id_{2N}$.

L'estimation à la réception était réalisée au moyen d'un estimateur ML.

La Fig. 6 donne le taux d'erreur binaire (BER) en fonction du rapport signal sur bruit optique (OSNR) dans la fibre multicœur. Dans ce cas, on a $\alpha^{2N} = 1$ mais on observe toutefois un gain (de OSNR) de plus d'1 dB par rapport à un système SDM non codé IQ.

## Revendications

**1.** Méthode de transmission SDM sur fibre optique à dualité de polarisation, destinée à transmettre, pendant une utilisation de canal, 2N symboles appartenant à une constellation de modulation dans le plan complexe, $N > 1$ étant le nombre de canaux spatiaux élémentaires utilisés pour la transmission, dans laquelle :

lesdits symboles subissent une séparation en partie réelle et partie imaginaire (220-520) pour fournir un premier vecteur constitué des parties réelles de ces symboles et un second vecteur constitué des parties imaginaires de ces mêmes symboles ;

une première transformation linéaire orthogonale (230-1,..,430-1) est appliquée au premier vecteur pour fournir un premier vecteur transformé ;

une seconde transformation linéaire orthogonale (230-2,..,530-2), distincte de la première, est appliquée au second vecteur pour fournir un second vecteur transformé ;

un scalaire complexe, solution d'un polynôme irréductible de $\mathbb{R}[X]$ dans $\mathbb{R}$ est multiplié au premier ou bien au second vecteur transformé, avant que les deux vecteurs transformés ne soient sommés pour fournir un vecteur constitué de $2N$ symboles d'émission complexes, chaque symbole d'émission complexe modulant un premier état et un second état de polarisation d'un canal spatial élémentaire.

2. Méthode de transmission SDM sur fibre optique à dualité de polarisation selon la revendication 1, **caractérisée en ce que** la première transformation linéaire est la composition d'une première rotation avec une première permutation non triviale et/ou une première réflexion non triviale dans $\mathbb{R}^{2N}$ et que la seconde transformation linéaire est la composition d'une seconde rotation avec une seconde permutation non triviale et/ou une seconde réflexion non triviale dans $\mathbb{R}^{2N}$ .

3. Méthode de transmission SDM sur fibre optique à dualité de polarisation selon la revendication 2, **caractérisée en ce que** la première permutation est composée d'une pluralité paire de transpositions et que la seconde permutation est composée d'une pluralité impaire de transpositions, ou réciproquement.

4. Méthode de transmission SDM sur fibre optique à dualité de polarisation selon la revendication 3, **caractérisée en ce que** la première rotation et la seconde rotation sont identiques.

5. Méthode de transmission SDM sur fibre optique à dualité de polarisation selon la revendication 2, **caractérisée en ce que** la première transformation linéaire orthogonale est l'identité.

6. Méthode de transmission SDM sur fibre optique à dualité de polarisation selon l'une des revendications précédentes, **caractérisée en ce que** le scalaire complexe, $\alpha$ est choisi tel que $\alpha^{2N}$ ne soit pas un réel positif.

7. Méthode de transmission SDM sur fibre optique à dualité de polarisation selon la revendication 5, **caractérisée en ce que** le scalaire complexe est égal à j avec $j^2$ = -1 .

8. Méthode de transmission SDM sur fibre optique à dualité de polarisation selon la revendication 7, **caractérisée en ce que** le nombre $N$ est impair avec $N \geq 3$.

9. Méthode de transmission SDM sur fibre optique à dualité de polarisation selon l'une des revendications précédentes, **caractérisée en ce que** les canaux spatiaux élémentaires sont des modes de propagation dans la fibre optique.

10. Méthode de transmission SDM sur fibre optique à dualité de polarisation selon l'une des revendications 1 à 8, **caractérisée en ce que** la fibre optique est de type multicœur et que les canaux spatiaux élémentaires sont différents cœurs de ladite fibre.


**Patentansprüche**

1. Verfahren zur SDM-Übertragung über eine optische Faser mit dualer Polarisation, bei dem während der Nutzung eines Kanals 2N Symbole übertragen werden, die einer Modulationskonstellation in der komplexen Ebene angehören, wobei $N>1$ die Anzahl der für die Übertragung verwendeten elementaren Raumkanäle ist, und in dem:

die genannten Symbole einer Trennung in Realteil und Imaginärteil (220-520) unterzogen werden, um einen ersten Vektor bereitzustellen, der aus den Realteilen dieser Symbole besteht, und einen zweiten Vektor, der aus den Imaginärteilen derselben Symbole besteht;
eine erste orthogonale lineare Transformation (230-1,...,430-1) auf den ersten Vektor angewendet wird, um einen ersten transformierten Vektor bereitzustellen;
eine zweite orthogonale lineare Transformation (230-2,...,530-2), die sich von der ersten unterscheidet, auf den zweiten Vektor angewendet wird, um einen zweiten transformierten Vektor bereitzustellen;
ein komplexer Skalar, die Lösung eines irreduziblen Polynoms von R[X] in R, mit dem ersten oder dem zweiten transformierten Vektor multipliziert wird, bevor die beiden transformierten Vektoren summiert werden, um einen Vektor bereitzustellen, der aus 2N komplexen Sendesymbolen besteht, wobei jedes komplexe Sendesymbol einen ersten und einen zweiten Polarisationszustand eines elementaren Raumkanals moduliert.

**2.** Verfahren zur SDM-Übertragung über eine optische Faser mit dualer Polarisation nach Anspruch 1, **dadurch gekennzeichnet, dass** die erste lineare Transformation die Zusammensetzung einer ersten Rotation mit einer ersten nicht-trivialen Permutation und/oder einer ersten nicht-trivialen Reflexion in $R^{2N}$ ist und die zweite lineare Transformation die Zusammensetzung einer zweiten Rotation mit einer zweiten nicht-trivialen Permutation und/oder einer zweiten nicht-trivialen Reflexion in $R^{2N}$ ist.

**3.** Verfahren zur SDM-Übertragung über eine optische Faser mit dualer Polarisation nach Anspruch 2, **dadurch gekennzeichnet, dass** die erste Permutation aus einer geraden Vielzahl von Transpositionen und die zweite Permutation aus einer ungeraden Vielzahl von Transpositionen besteht, oder umgekehrt.

**4.** Verfahren zur SDM-Übertragung über eine optische Faser mit dualer Polarisation nach Anspruch 3, **dadurch gekennzeichnet, dass** die erste Rotation und die zweite Rotation identisch sind.

**5.** Verfahren zur SDM-Übertragung über eine optische Faser mit dualer Polarisation nach Anspruch 2, **dadurch gekennzeichnet, dass** die erste orthogonale lineare Transformation die Identität ist.

**6.** Verfahren zur SDM-Übertragung über eine optische Faser mit dualer Polarisation nach einem der vorhergehenden Ansprüche, **dadurch gekennzeichnet, dass** der komplexe Skalar $\alpha$ so gewählt wird, dass $\alpha^{2N}$ kein positiver reeller Wert ist.

**7.** Verfahren zur SDM-Übertragung über eine optische Faser mit dualer Polarisation nach Anspruch 5, **dadurch gekennzeichnet, dass** der komplexe Skalar gleich $j$ ist, wobei $j^2 = -1$ ist.

**8.** Verfahren zur SDM-Übertragung über eine optische Faser mit dualer Polarisation nach Anspruch 7, **dadurch gekennzeichnet, dass** die Zahl $N$ ungerade ist und $N \geq 3$ ist.

**9.** Verfahren zur SDM-Übertragung über eine optische Faser mit dualer Polarisation nach einem der vorhergehenden Ansprüche, **dadurch gekennzeichnet, dass** die elementaren Raumkanäle Ausbreitungsmoden in der optischen Faser sind.

**10.** Verfahren zur SDM-Übertragung über eine optische Faser mit dualer Polarisation nach einem der Ansprüche 1 bis 8, **dadurch gekennzeichnet, dass** die optische Faser vom Multikern-Typ ist und die elementaren Raumkanäle verschiedene Kerne der Faser sind.

**Claims**

**1.** SDM transmission method over optical fiber with polarization duality, intended to transmit, during one channel use, 2N symbols belonging to a modulation constellation in the complex plane, N > 1 being the number of spatial elementary channels used for transmission, wherein:

said symbols undergo a separation into real part and imaginary part (220-520) to provide a first vector consisting of the real parts of these symbols and a second vector consisting of the imaginary parts of these same symbols; a first orthogonal linear transformation (230-1,..,430-1) is applied to the first vector to provide a first transformed vector; a second orthogonal linear transformation (230-2,..,530-2), distinct from the first, is applied to the second vector to provide a second transformed vector;

a complex scalar, solution of an irreducible polynome from $\mathbb{R}[X]$ in $\mathbb{R}$ is multiplied to the first or to the second transformed vector, before the two transformed vectors are summed to provide a vector consisting of 2N complex emission symbols, each complex transmission symbol modulating a first state and a second polarization state of a spatial elementary channel.

**2.** SDM transmission method over optical fiber with polarization duality according to claim 1, **characterized in that** the first linear transformation is the composition of a first rotation with a first non-trivial permutation and/or a first non-trivial reflection in $\mathbb{R}^{2N}$ and that the second linear transformation is the composition of a second rotation with a second non-trivial permutation and/or a second non-trivial reflection in $\mathbb{R}^{2N}$.

3. SDM transmission method over optical fiber with polarization duality according to claim 2, **characterized in that** the first permutation is composed of an even plurality of transpositions and that the second permutation is composed of an odd plurality of transpositions, or vice versa.

4. SDM transmission method over optical fiber with polarization duality according to claim 3, **characterized in that** the first rotation and the second rotation are identical.

5. SDM transmission method over optical fiber with polarization duality according to claim 2, **characterized in that** the first orthogonal linear transformation is identity.

6. SDM transmission method over optical fiber with polarization duality according to one of the preceding claims, **characterized in that** the complex scalar, $\alpha$ is chosen such that $\alpha^{2N}$ is not a positive real.

7. SDM transmission method over optical fiber with polarization duality according to claim 5, **characterized in that** the complex scalar is equal to j with $j^2 = -1$.

8. SDM transmission method over optical fiber with polarization duality according to claim 7, **characterized in that** the number N is odd with $N \geq 3$.

9. SDM transmission method over optical fiber with polarization duality according to one of the preceding claims, **characterized in that** the spatial elementary channels are propagation modes in the optical fiber.

10. SDM transmission method over optical fiber with polarization duality according to one of claims 1 to 8, **characterized in that** the optical fiber is of the multi-core type and that the elementary spatial channels are different cores of said fiber.

Fig. 1

Fig. 2

Fig. 3

EP 4 388 684 B1

Fig. 4

Fig. 5

4-core MCF, CDL = 4,5dB

Gaussian Channel
--○--Uncoded, 4-core MCF, CDL= 4,5dB
--□--IQ-code, 4-code MCF, CDL= 4,5dB

$E_b/N_0$ (dB)

# Fig. 6

## RÉFÉRENCES CITÉES DANS LA DESCRIPTION

**Littérature non-brevet citée dans la description**

- *Emerging DSP techniques for multi-core fiber transmission systems*, 2015
- **EL MEHDI AMHOUD et al.** *Techniques de codage pour le multiplexage spatial sur les systèmes fibres optiques*, 2018
- **C. ZHU et al.** Improved polarization dependent loss tolerance for polarization multiplexed coherent optical systems by polarization pairwise coding. *Optics Express*, 19 October 2015, vol. 23 (21), 27434-27447